# EUROPEAN PATENT SPECIFICATION

(11) **EP 1 842 759 B1**
(45) Date of publication and mention of the grant of the patent: **19.11.2014**
(21) Application number: 07075248.0
(22) Date of filing: 02.04.2007
(51) Int. Cl.: B62B 7/04

(54) **Stroller**
Kinderwagen
Poussette

(30) Priority: 05.04.2006 NL 1031517
(43) Date of publication of application: 10.10.2007
(73) Proprietor: Maxi Miliaan B.V., 5704 RD Helmond (NL)
(72) Inventor: van Dijk, John Gert Til, 5701 SK Helmond (NL)
(74) Representative: Veldman-Dijkers, Cornelia G. C.

(56) References cited:
- EP-A- 1 491 420
- WO-A-02/20291
- WO-A-03/097426
- DE-A1- 19 829 076
- DE-U1-202004 012 083
- NL-C1- 1 017 961

## Description

The invention relates to a stroller comprising a frame and wheels supporting the frame, which stroller can at least be wheeled over a ground surface in a horizontal direction of movement, wherein at least two wheels are interconnected by a connecting element which is pivotable with respect to the frame about a pivot axis that extends at an angle to the horizontal, which wheels are movable in opposite vertical directions and in opposite horizontal directions parallel to a direction of movement of the stroller upon pivoting of the connecting element.

With such a stroller, which is known from DE-A1-198.29.076, an inner front wheel is moved slightly rearwards, seen in the direction of movement, and upwards, seen in vertical direction, with respect to the frame when the stroller is moved round a bend, whilst the outer front wheel is moved slightly forwards, seen in the direction of movement, and downwards, seen in vertical direction. As a result, the stroller will take up an inclined position in the bend.

It has been found, however, that when one of the front wheels, for example, comes into contact with an obstacle present on the ground surface upon movement of the stroller in a horizontal, forward direction, a horizontal force is exerted on the stroller via said front wheel, which force is converted by the connecting element into a movement of the wheels that corresponds to the movement of a stroller round a bend whereby the wheels also partly pivot about the vertical. This makes it difficult to move the stroller in a straight line, especially if obstacles are present on the ground surface.

The object of the invention is to provide a stroller in which an improved transmission of the forces exerted on the stroller and an improved positioning of the wheels is realised.

This object is accomplished with the stroller according to the invention in that the wheels are pivotable with respect to the connecting element about substantially vertically extending pivot axes.

When a first wheel comes into contact with an obstacle, said first wheel is moved in a horizontal direction opposite to the direction of movement and a vertical direction away from the ground surface as a result of said pivoting of the connecting element, whilst the other, second wheel is moved horizontally in the direction of movement with respect to the frame and is pressed more firmly against the ground surface. As a result, the first wheel can readily move over the obstacle. Upon doing so, the wheels can also pivot about the vertical pivot axes in a direction opposite to the direction of pivoting of the connecting element, so that the direction of movement of the wheels will remain unchanged.

Since the wheel is movable not only in vertical direction but also in horizontal direction, a better transmission of forces is obtained when a wheel hits an obstacle present on the ground surface.

Since the wheels are pivotable about vertically extending pivot axes, turning the stroller about a vertically extending axis when going round a bend is moreover comparatively easy.

Yet another embodiment of the stroller according to the invention is characterised in that the pivot axis includes an angle of at least 20 degrees with the horizontal.

When such an angle is used, an advantageous relation is obtained between the horizontal movement and the vertical movement of each wheel.

Yet another embodiment of the stroller according to the invention is characterised in that the pivot axis includes an acute angle with the horizontal, seen in the direction of movement.

When such an acute at angle is used, one wheel will be moved in a vertical direction away from the ground surface and a horizontal direction opposite to the direction of movement, whilst the other wheel will be moved in the opposite direction. In this way an efficient transmission of forces is obtained.

Yet another embodiment of the stroller according to the invention is characterised in that the connecting element is pivotally connected to the frame against spring force.

As a result of the spring force, the starting position of the connecting element will be such that the wheels are identically oriented with respect to the frame. Only in the case of a force being exerted on one of the wheels will the connecting element pivot against said spring force. Once said force is released, the connecting element will pivot back to the starting position under the influence of the spring force.

Another embodiment of the stroller according to the invention is characterised in that the connecting element comprises an unround shaft which is pivotally journalled in an unround opening in a material that is elastically deformable against spring force.

As a result, the connecting element is spring-connected to the frame in a relatively simple manner.

The elastically deformable material preferably comprises rubber.

The connecting element may also be spring-connected to the frame by means of a leaf spring or a spiral spring. Such springs, too, can be realised in a relatively simple manner.

Another embodiment of the stroller according to the invention is characterised in that the connecting element is detachably connected to the frame.

In this way the connecting element and the wheels connected thereto can be readily detached from the frame, after which the frame is preferably collapsible, so that the frame and the connecting element that has been detached therefrom can easily be transported, for example in a car.

Yet another embodiment of the stroller according to the invention is characterised in that the wheels connected to the connecting element are the front wheels of the stroller, seen in the direction of movement.

The front wheels of the stroller are the wheels that first come into contact with an obstacle present on the ground surface. Since said wheels are connected to the connecting element, an efficient transmission of the forces being exerted on the stroller is obtained. It is also possible, of course, to provide the rear wheels of the stroller, seen in the direction of movement, with such a connecting element or to provide both the front wheels and the rear wheels with a connecting element.

A further embodiment of the stroller according to the invention is characterised in that the wheel is simultaneously movable in a vertical direction away from the ground surface and a horizontal direction opposite to the direction of movement.

As soon as the wheel comes into contact with an obstacle present on the ground surface, a force will be exerted on the wheel in a horizontal direction opposite to the direction of movement. This causes the wheel to move in that direction, but the wheel will simultaneously be moved in a vertical direction away from the ground surface, as a result of which the wheel is moved over said obstacle. In this way an advantageous transmission of forces is obtained.

Another embodiment of the stroller according to the invention is characterised in that the wheel is movable against spring force.

As a result, the wheel will be moved against spring force with respect to the frame upon hitting an obstacle, and subsequently the wheel will be returned to its original starting position under the influence of spring force.

The invention will now be explained in more detail with reference to the drawings, in which:
Figures 1A-1C are a perspective view, a front view and a side view, respectively, of a stroller according to the invention;
Figure 2 is a perspective, exploded view of a part of the stroller shown in figures 1A-1C;
Figure 3 shows a detail of the perspective view of figure 2;
Figure 4 is a perspective view corresponding to the detail view of figure 3, in which a few components are shown in assembled condition;
Figure 5 is a sectional side view of a part of the stroller shown in figure 1C;
Figures 6A-6C are a perspective view, a front view and a side view, respectively, of the stroller shown in figures 1A-1C, in which the front wheels have been moved with respect to the frame;
Figures 7 shows a part of the side view of figure 6C;
Figures 8A and 8B are a sectional side view and a front view in the direction indicated by the arrows VIII-VIII of an alternative embodiment of the spring-mounted construction shown in figures 2-4;
Figures 9A and 9B are a sectional side view and a front view in the direction indicated by the arrows IX-IX of an alternative embodiment of the spring-mounted construction shown in figures 2-4.

Like parts are indicated by the same numerals in the figures.

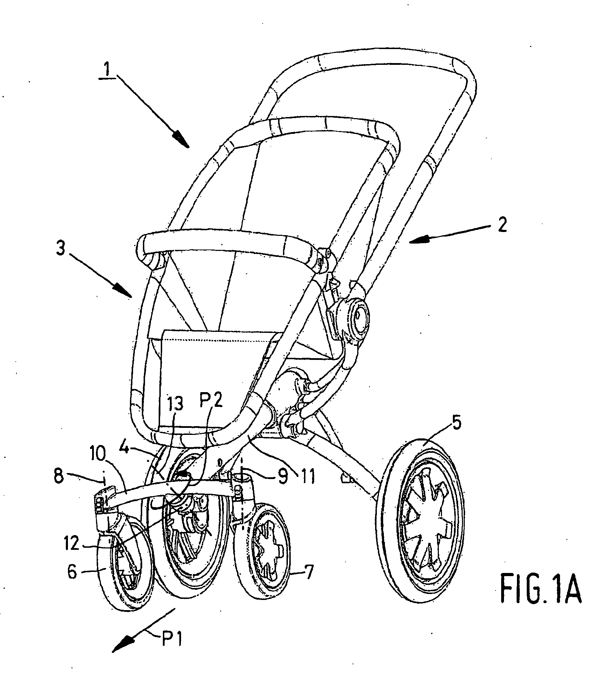

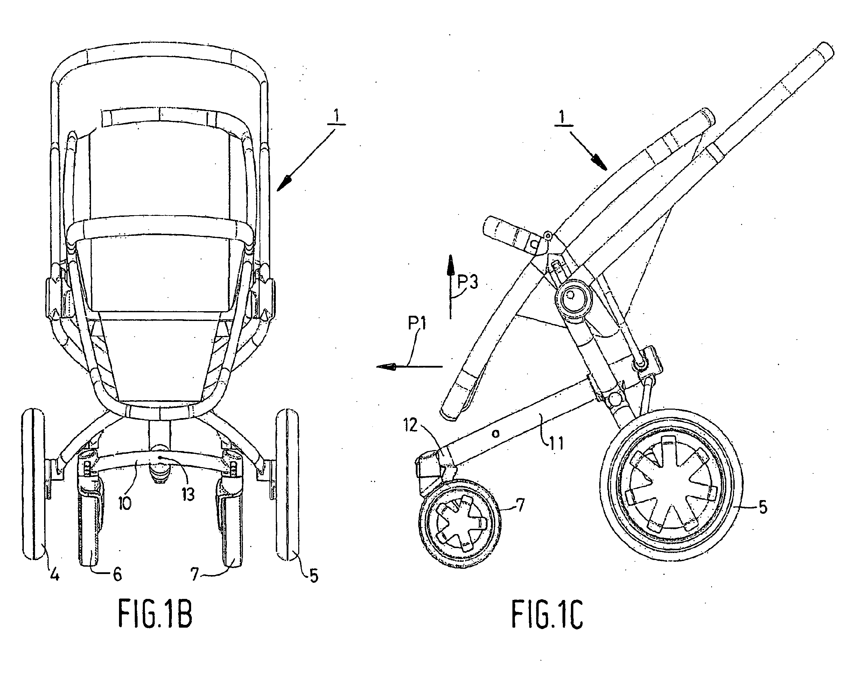

Figures 1A-1C are a perspective view, a front view and a side view, respectively, of a stroller 1 according to the invention, which comprises a frame 2, a seat 3 supported by the frame 2 and detachably connected thereto, a pair of rear wheels 4, 5 and a pair of front wheels 6, 7. The rear wheels 4, 5 and the front wheels 6, 7 support the frame 2. The front wheels 6, 7 are pivotally connected about vertically extending pivot axes 8, 9 to a rod 10, which extends substantially transversely to the direction of movement of the stroller indicated by the arrow P1. The rod 10 forms a connecting element for interconnecting the front wheels 6, 7. The frame 2 comprises a section 11 extending in the direction of movement indicated by the arrow P1, which section is provided with a connecting element 12 at an end located near the front wheels 6, 7, to which connecting element 12 the rod 10 can be detachably connected. The rod 10 is pivotable about a pivot axis 13 with respect to the connecting element 12 in the direction indicated by the arrow P2 and in the opposite direction. Pivoting of the rod 10 about the pivot axis 13 causes the wheels 6, 7 to be moved with respect to the frame 2 in the horizontal direction indicated by the arrow P2 and in the opposite direction and in the vertical direction indicated by the arrow P3 and in the opposite direction.

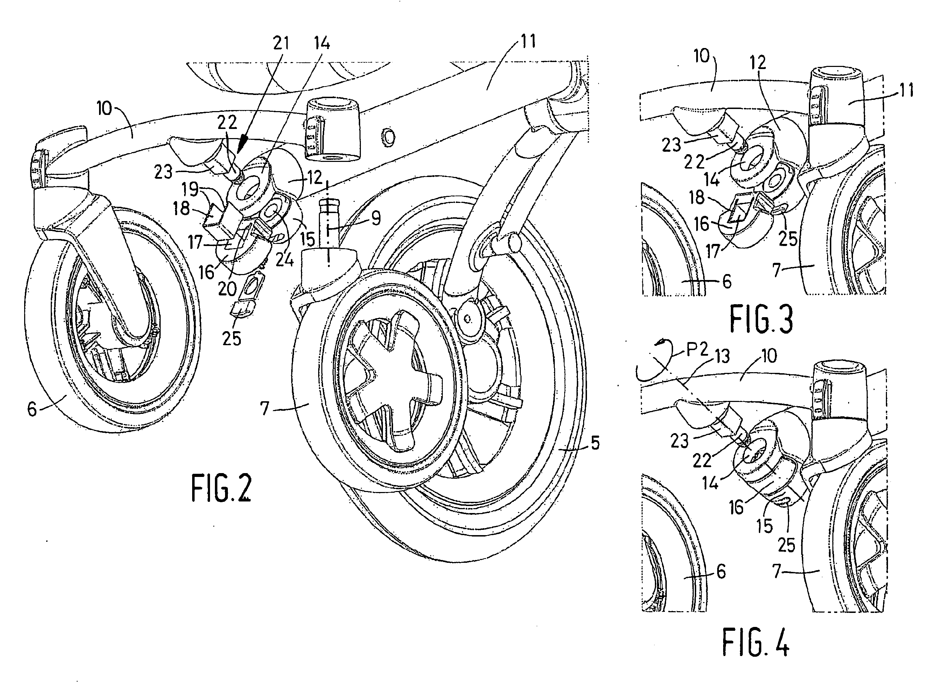

Figures 2-5 show an embodiment of the connection of the rod 10 to the connecting element 12 of a stroller 1 according to the invention. The connecting element 12 comprises two spaced-apart annular elements 14, 15 and a rubber block 16 that can be positioned between said annular elements 14, 15. The rubber block 16 is provided with a square passage 17, in which a U-shaped metal section 18 is positioned. Legs 19 of the U-shaped section 18 extend into gaps 20 that connect to the square passage 17. As a result, the U-shaped section 18 is adequately locked in position in the rubber element 16. The rod 10 is provided with a pin 21 extending parallel to the pivot axis 13, which pin comprises a circular cylindrical part 22 and a square part 23 located between the circular cylindrical part 22 and the rod. The dimensions of the square part 23 are such that it fits in the square passage 17 defined by the rubber element 16 and the U-shaped section 18. After the element 16 has been positioned between the annular elements 14, 15 (see figure 4), the pin 21 can be inserted into the annular element 14 until the part 22 is positioned in the opening 24 in the annular part 15 and the square part 23 is positioned in the square passage 17. The pin 21 is retained in the position thus obtained by means of a locking pawl 25. The circular cylindrical part 22 can pivot in the opening 24 in the direction indicated by the arrow P2 and in the opposite direction. During said pivoting, the square part 22 exerts a force on the metal U-shaped part 18, resulting in elastic deformation of the rubber element 16.

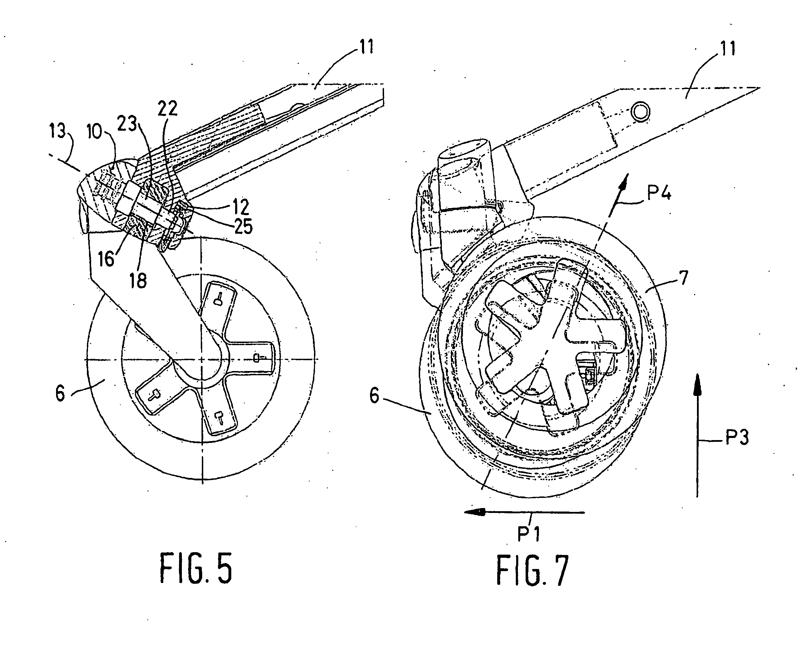

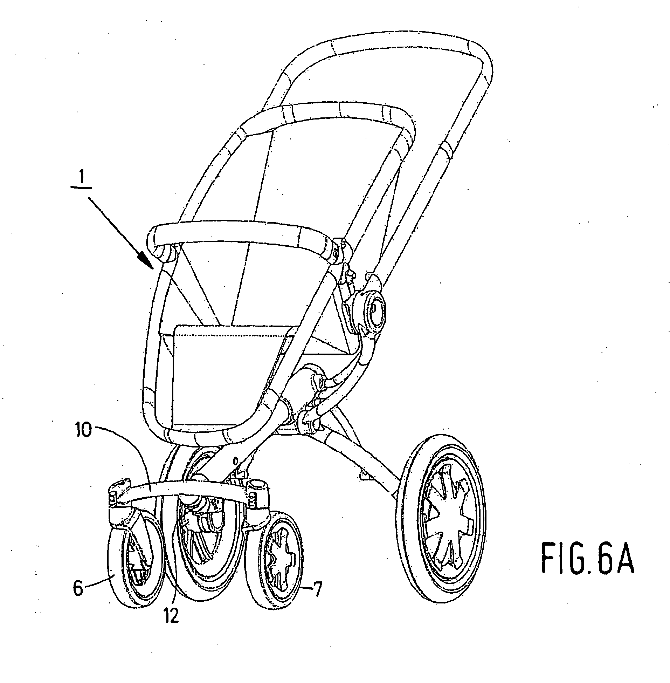

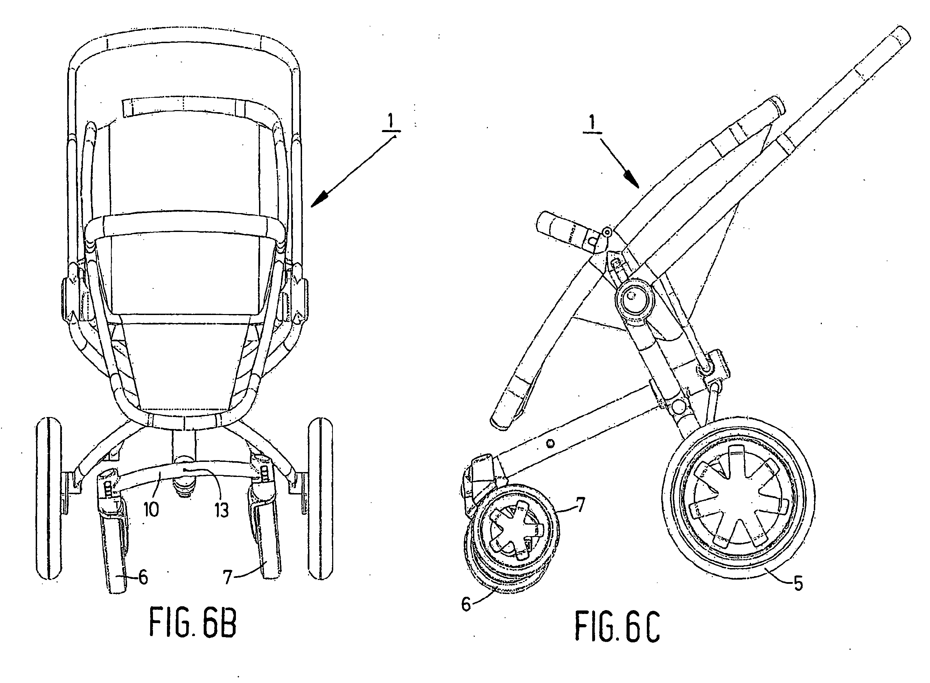

Figures 6A-6C and figure 7 show a situation in which the front wheel 7 comes into contact with an obstacle present on a ground surface, as a result of which a force is exerted on the front wheel 7 in a direction opposite to the direction indicated by the arrow P1 and in the direction indicated by the arrow P3. The resultant of said force extends in the direction indicated by the arrow P4 (see figure 7). As a result of said force P4, the wheel 7 is moved in said direction, whilst the rod 10 pivots in the direction indicated by the arrow P2 and the wheel 6 is moved in a direction opposite to the direction of movement of the wheel 7. The wheel that comes into contact with an obstacle is moved in a direction away from the ground surface and in a direction opposite to the direction of movement, whilst the other wheel is moved in the direction of movement and in a direction towards the ground surface. In this way the stroller is moved over the obstacle in a simple manner.

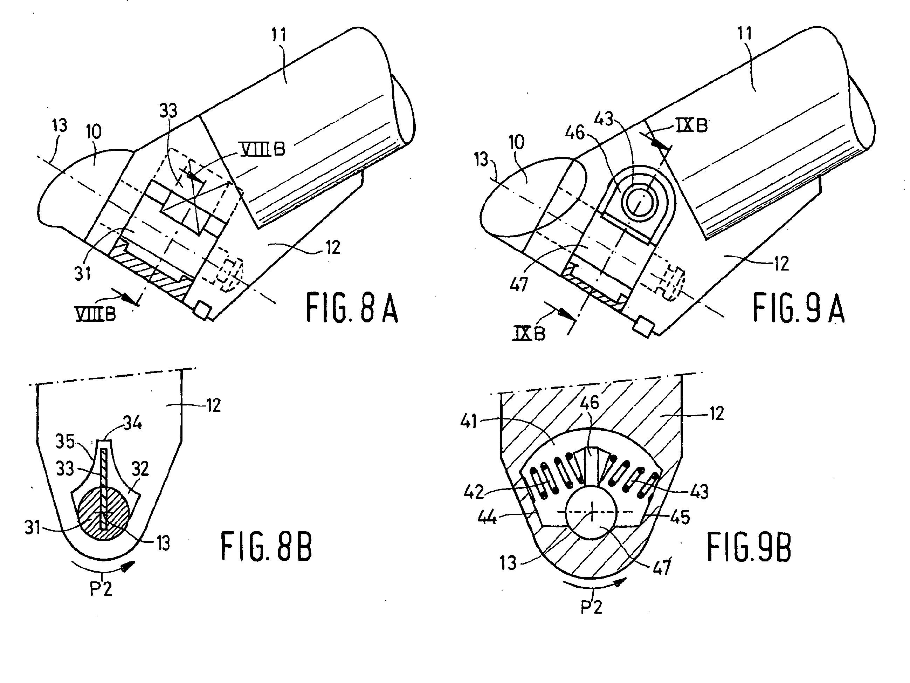

Figures 8A hand 8B show another embodiment of a spring connection of the rod 3 to the connecting element 12. The rod 3 is provided with a pin 31, which extends through an opening 32 in the connecting element 12. The pin 31 is provided with a leaf spring 33 extending transversely to the pin 31, which leaf spring is positioned in a chamber 34 of the opening 32 with a side remote from the pin 31. The leaf spring 33 will deform when the rod 10 and the pin 31 connected thereto pivot in the direction indicated by the arrow P2 or in the opposite direction and slide along a wall 35 of the openings 32. Once the forces being exerted on the stroller and 1 are released, the rod 10 will return to the position shown in figure 8B under the influence of the spring force of the leaf spring 33.

Figures 9A and 9B show yet another embodiment of a spring connection between the rod 10 and the connecting element 12. The connecting element 12 comprises a chamber 41, in which two spiral springs 42, 43 are positioned. The spiral springs 42, 43 abut against the walls 44, 45 of the chamber 41 with one end and against a plate 46 with an end remote from the walls 44, 45. The plate 46 forms part of a pin 47 that is connected to the rod 10. Pivoting of the rod 10 and the pin 47 connected thereto in the direction indicated by the arrow P2 or in the opposite direction results in compression of one spiral spring 43, 44 and extension of the other spiral spring 43, 44. As soon as the forces being exerted on the two front wheels 6, 7 are in balance again, the rod 10 will return to the starting position shown in figures 1A-1C under the influence of the spring force of the springs 43, 43.

Is also possible to configure the wheels 6, 7 to be movable independently of each other, whereby for example each wheel 6,7 is pivotable about the pivot axis 13 by means of separate connecting elements 12.

## Claims

1. A stroller (1) comprising a frame (2) and wheels (4, 5: 6, 7) supporting the frame, which stroller can at least be wheeled over a ground surface in a horizontal direction of movement, wherein at least two wheels (4, 5: 6, 7) are interconnected by a connecting element (10) which is pivotable with respect to the frame about a pivot axis (13) that extends at an angle to the horizontal, which wheels (4, 5: 6, 7) are movable in opposite vertical directions and in opposite horizontal directions parallel to a direction of movement of the stroller (1) upon pivoting of the connecting element (10), **characterised in that** the wheels (4, 5, 6, 7) are pivotable with respect to the connecting element (10) about substantially vertically extending pivot axes (8, 9).

2. A stroller (1) according to claim 1, **characterised in that** the pivot axis (13) includes an angle of at least 20 degrees with the horizontal.

3. A stroller (1) according to claim 1 or 2, **characterised in that** the pivot axis (13) includes an acute angle with the horizontal, seen in the direction of movement.

4. A stroller (1) according to any one of the preceding claims, **characterised in that** the connecting element (10) is pivotally connected to the frame (2) against spring force.

5. A stroller (1) according to claim 4, **characterised in that** the connecting element (10) comprises an unround shaft (23) which is pivotally journalled in an unround opening (17) in a material that is elastically deformable against spring force.

6. A stroller (1) according to claim 5, **characterised in that** the elastically deformable material comprises rubber.

7. A stroller (1) according to any one of the preceding claims, **characterised in that** at least a leaf spring (33) or a spiral spring (42, 43) is provided between the connecting element (10) and the frame (2).

8. A stroller (1) according to any one of the preceding claims, **characterised in that** the connecting element (10) is detachably connected to the frame.

9. A stroller (1) according to any one of the preceding claims, **characterised in that** the wheels connected to the connecting element (10) are the front wheels (6, 7) of the stroller, seen in the direction of movement.

10. A stroller (1) according to any one of the preceding claims, **characterised in that** one of the wheels is simultaneously movable in a vertical direction away from the ground surface and a horizontal direction opposite to the direction of movement.

11. A stroller (1) according to claim 10, **characterised in that** the wheel is movable against spring force.

## Patentansprüche

1. Kinderwagen (1) mit einem Rahmen (2) und mit den Rahmen tragenden Rädern (4, 5; 6, 7), wobei der Kinderwagen zumindest über eine Geländefläche in horizontaler Bewegungsrichtung gerollt werden kann, wobei zumindest zwei Räder (4, 5; 6, 7) durch ein Verbindungselement (10), das bezüglich des Rahmens um eine in einem Winkel zur Horizontalen verlaufende Schwenkachse (13) geschwenkt werden kann, miteinander verbunden sind, wobei beim Schwenken des Verbindungselements (10) die Räder (4, 5; 6, 7) parallel zur Bewegungsrichtung des Kinderwagens (1) gegenläufig senkrecht und gegenläufig waagerecht bewegbar sind, **dadurch gekennzeichnet, dass** die Räder (4, 5, 6, 7) bezüglich des Verbindungselements (10) um im Wesentlichen senkrecht verlaufende Schwenkachsen (8, 9) schwenkbar sind.

2. Kinderwagen (1) nach Anspruch 1, **dadurch gekennzeichnet, dass** die Schwenkachse (13) mit der Horizontalen einen Winkel von mindestens 20° einschließt.

3. Kinderwagen (1) nach Anspruch 1 oder 2, **dadurch gekennzeichnet, dass** die Schwenkachse (13) einen in Bewegungsrichtung gesehen spitzen Winkel mit der Horizontalen einschließt.

4. Kinderwagen (1) nach einem der vorangehenden Ansprüche, **dadurch gekennzeichnet, dass** das Verbindungselement (10) mit dem Rahmen (2) gegen Federkraft schwenkbar verbunden ist.

5. Kinderwagen (1) nach Anspruch 4, **dadurch gekennzeichnet, dass** das Verbindungselement (10) einen unrunden Schaft (23) umfasst, der in einer unrunden Öffnung (17) in einem gegen Federkraft elastisch verformbaren Material gelagert ist.

6. Kinderwagen (1) nach Anspruch 5, **dadurch gekennzeichnet, dass** das elastisch verformbare Material Gummi umfasst.

7. Kinderwagen (1) nach einem der vorangehenden Ansprüche, **dadurch gekennzeichnet, dass** zwischen Verbindungselement (10) und Rahmen (2) zumindest eine Blattfeder (33) oder eine Spiralfeder (42, 43) vorgesehen ist.

8. Kinderwagen (1) nach einem der vorangehenden Ansprüche, **dadurch gekennzeichnet, dass** das Verbindungselement (10) mit dem Rahmen abnehmbar verbunden ist.

9. Kinderwagen (1) nach einem der vorangehenden Ansprüche, **dadurch gekennzeichnet, dass** die mit dem Verbindungselement (10) verbundenen Räder in Bewegungsrichtung gesehen die Vorderräder (6, 7) des Kinderwagens sind.

10. Kinderwagen (1) nach einem der vorangehenden Ansprüche, **dadurch gekennzeichnet, dass** eines der Räder gleichzeitig in senkrechter Richtung von der Geländefläche weg und in horizontaler Richtung entgegen zur Bewegungsrichtung bewegbar ist.

11. Kinderwagen (1) nach Anspruch 10, **dadurch gekennzeichnet, dass** das Rad gegen Federkraft bewegbar ist.

## Revendications

1. Poussette (1) comprenant un cadre (2) et des roues (4, 5 ; 6, 7) supportant le cadre, laquelle poussette peut au moins être roulée sur une surface du sol dans une direction de déplacement horizontale, dans laquelle au moins deux roues (4, 5 ; 6, 7) sont interconnectées par un élément de liaison (10) qui peut pivoter par rapport au cadre autour d'un axe de pivotement (13) qui s'étend selon un angle par rapport à l'horizontale, lesquelles roues (4, 5 ; 6, 7) sont mobiles dans des directions verticales opposées et dans des directions horizontales opposées parallèlement à une direction de déplacement de la poussette (1) lors du pivotement de l'élément de liaison (10), **caractérisée en ce que** les roues (4, 5 ; 6, 7) peuvent pivoter par rapport à l'élément de liaison (10) autour d'axes de pivotement s'étendant sensiblement de manière verticale (8, 9).

2. Poussette (1) selon la revendication 1, **caractérisée en ce que** l'axe de pivotement (13) inclut un angle d'au moins 20 degrés par rapport à l'horizontale.

3. Poussette (1) selon la revendication 1 ou 2, **caractérisée en ce que** l'axe de pivotement (13) inclut un angle aigu par rapport à l'horizontale, vu dans la direction de déplacement.

4. Poussette (1) selon l'une quelconque des revendications précédentes, **caractérisée en ce que** l'élément de liaison (10) est relié de manière pivotante au cadre (2) contre une force de ressort.

5. Poussette (1) selon la revendication 4, **caractérisée en ce que** l'élément de liaison (10) comprend un arbre non arrondi (23) qui est monté de manière pivotante dans une ouverture non arrondie (17) dans un matériau qui est déformable élastiquement contre une force de ressort.

6. Poussette (1) selon la revendication 5, **caractérisée en ce que** le matériau élastiquement déformable comprend du caoutchouc.

7. Poussette (1) selon l'une quelconque des revendications précédentes, **caractérisée en ce qu'**au moins un ressort à lames (33) ou un ressort en spirales (42, 43) est fourni entre l'élément de liaison (10) et le cadre (2).

8. Poussette (1) selon l'une quelconque des revendications précédentes, **caractérisée en ce que** l'élément de liaison (10) est relié de manière détachable au cadre.

9. Poussette (1) selon l'une quelconque des revendications précédentes, **caractérisée en ce que** les roues reliées à l'élément de liaison (10) sont les roues avant (6, 7) de la poussette, vu dans la direction de déplacement.

10. Poussette (1) selon l'une quelconque des revendications précédentes, **caractérisée en ce que** l'une des roues est mobile simultanément dans une direction verticale s'éloignant de la surface du sol et une direction horizontale opposée à la direction de déplacement.

11. Poussette (1) selon la revendication 10, **caractérisée en ce que** la roue est mobile contre une force de ressort.
